Europäisches Patentamt

European Patent Office

Office européen des brevets

(11) Publication number: **0 123 533**

**A1**

# EUROPEAN PATENT APPLICATION

(21) Application number: **84302701.2**

(22) Date of filing: **19.04.84**

(51) Int. Cl.³: **C 08 F 259/04**
**C 08 F 114/06**
**//(C08F259/04, 214/06)**

(30) Priority: **21.04.83 US 487395**

(43) Date of publication of application:
**31.10.84 Bulletin 84/44**

(84) Designated Contracting States:
**BE DE FR GB NL SE**

(71) Applicant: **CONOCO INC.**
**1000 South Pine Street P.O. Box 1267**
**Ponca City Oklahoma 74601(US)**

(72) Inventor: **Lewis, Max H.**
**1712 Prospect**
**Ponca City Oklahoma 74601(US)**

(72) Inventor: **Yang, Kang**
**2501 Robin Road**
**Ponca City Oklahoma 74601(US)**

(74) Representative: **Woodman, Derek et al,**
**FRANK B. DEHN & CO. Imperial House 15-19 Kingsway**
**London WC2B 6UZ(GB)**

(54) Suspension polymerization with emulsion seeds.

(57) A process for the production of an improved PVC resin is described, comprising: adding vinyl chloride seeds obtained from emulsion polymerization, to vinyl chloride monomer suspension polymerization systems; conducting suspension polymerization reactions of vinyl chloride monomer, and collecting the product. The use of this process results in finer control over resin particle size, and improved resin quality.

EP 0 123 533 A1

SUSPENSION POLYMERIZATION WITH EMULSION SEEDS

Background Of The Invention

The suspension polymerization of vinyl chloride monomer is improved by adding emulsion polymerized vinyl chloride to the suspension polymerization system. Advantages obtained include decreased polymerization time, control over the particle size of the suspension polymerization product, and use of lower concentrations of initiators and suspension agents. Improvements in polyvinyl chloride resin are also obtained.

The concept of seeding vinyl chloride polymerization systems can be found in the prior art. U.S. Patent 3,879,364 teaches the use of suspension polymerized vinyl chloride seed in a suspension polymerization system, and the use of emulsion polymerized vinyl chloride seeds in an emulsion polymerization system. The use of emulsion polymerization seeds in emulsion polymerization systems is also taught in U.S. Patents 4,245,070; 4,331,788; 4,091,197; and 3,725,367.

Summary Of The Invention

The instant invention provides a process for improving the suspension polymerization process, and the resins produced therefrom. The process provides an improved PVC resin while decreasing reaction time, and comprises: adding emulsion polymerized vinyl chloride seed to a vinyl chloride monomer suspension polymerization system; conducting a suspension polymerization of vinyl chloride monomer, and collecting the product.

The "seed" used in this process is a polyvinyl chloride latex or solid resin obtained from polymerization by an emulsion system. Any conventional emulsion system can be used to produce the resin or latex seed.

The particle size of the suspension polymerized vinyl chloride resin product can be varied and controlled

- 2 -

by the use of the instant invention. Such variation and control is possible because the suspension polymerized vinyl chloride resin particle size varies inversley with the concentration of emulsion vinyl chloride polymerization seed. Thus, small concentrations of emulsion polymerization seed will produce larger suspension polymerized vinyl chloride resin particles, and large concentrations of emulsion polymerized polyvinyl chloride (PVC) seed will produce small particle sizes.

Other benefits may also be obtained by the use of emulsion vinyl chloride seed in suspension polymerizations. These benefits include improved vinyl chloride resin properties, a decrease in polymerization time, and elimination of the suspending agent in the suspension polymerization when sufficiently large concentrations of emulsion polymerized seed are used.

Detailed Description Of The Invention

The use of emulsion polymerized vinyl chloride seed in a suspension polymerization system improves both the process and the resin produced. The emulsion seed used can be produced by any emulsion polymerization process commonly known to the art. Representative but nonexhaustive examples of such processes are: U.S. Patent 3,332,918; U.S. Patent 3,578,648; U.S. Patent 4,046,730; and U.S Patent 4,091,197.

The emulsion polymerized vinyl chloride seed used can be either resin or liquid latex. Although any type of emulsion-produced polyvinyl chloride can be used, the preferred emulsion seed is an emulsion polymerized vinyl chloride resin or latex without additives. Generally any emulsion-produced polyvinyl chloride resin or latex has a suitable particle size to be used as seed in the process of the instant invention. Preferably, the average emulsion seed size is less than 75 microns while a more preferred average seed size is less than 5 microns.

- 3 -

Variation of the emulsion seed concentration within the suspension polymerization system will extend control over the suspension polymerized product particle size. When the emulsion seed is present in a concentration of from about 0.001 to about 0.65 parts per hundred parts monomer (phm), a suspension polymerized polyvinyl chloride resin can be produced having an average particle size ranging from about 180 microns to about 165 microns in diameter. By maintaining emulsion seed concentration in the range of from about 0.65 to about 1.45 phm, a suspension polymerized polyvinyl chloride resin can be produced having an average particle size of from about 165 microns to about 135 microns in diameter. When the emulsion seed concentration is from about 1.45 to about 50 phm, a suspension polymerized polyvinyl chloride resin can be produced with an average particle size of from about 135 microns to about 115 microns in diameter. Maintenance of the emulsion seed concentration in higher ranges, however, sacrifices productivity. A preferred emulsion seed concentration is in the range of from about 1.45 to about 25 phm.

Maintenance of the emulsion seed concentration in the higher ranges allows the suspension agent concentration to be reduced in the suspension polymerization system. Where the emulsion seed concentration is from about 2 to about 50 phm the suspension agent concentration can be maintained at concentrations less than 0.15 phm.

When emulsion seed concentration is maintained in the range of from about 3 to about 50 phm, it is preferred to reduce the suspension agent concentration to less than 0.05 phm or if desired, the suspension agent may be totally eliminated. Components may be added to the suspension polymerization system in any manner or order. When the suspension agent is added to the reactor being used for the emulsion-seeded vinyl chloride suspension reaction, any manner or order of addition of the components can be used. Normally the emulsion-produced seed and vinyl chloride monomer are mixed prior to addition of the suspension agent. This mixing may be done prior to addition to the reactor, or inside the reactor itself.

When the emulsion seed concentration is maintained in the range of from about 3 to about 50 parts per hundred parts of monomer (phm), it is possible to use less initiator to reach the desired conversion without extending polymerization time. Rate of polymerization is increased by adding emulsion seeds to the suspension polymerization system. Thus if initiator concentration is maintained at the same level, polymerization time will be substantially reduced.

Emulsion polymerization vinyl chloride seed can be used with any suspension polymerization process. The type and amounts of suspending agent and initiators normally used with such reaction can be used. Representative but nonexhaustive examples of the suspension vinyl chloride polymerization processes in which emulsion seeds can be used are disclosed in U.S. Patent 2,985,638; U.S. Patent 3,879,364; U.S. Patent 3,781,255; and U.S. Patent 3,801,519.

When emulsion-produced seed is used in a suspension polymerization, a better quality resin is produced. With the seed concentration set in excess of a minimum of about 3 phm, Gardner color, for example, is improved. A suitable range for improved resin is from about .3 to about 10 phm.

- 5 -

The following examples are provided to illustrate the invention and not to limit it. All parts and percentages are by weight unless otherwise indicated.

EXAMPLE 1

Four polymerization tests were made in a 50 gal. vinyl chloride suspension polymerization at 57°C. The following materials were added to each test:

Quantity

| | |
|---|---|
| 81.65 kg | Water |
| 54.43 kg | Vinyl Chloride Monomer |
| 2.18 kg | Hydroxypropyl Methylcellulose solution (1 1/2% concentrated in $H_2O$) |
| 0.51 kg | Di(2-ethylhexyl) Peroxydicarbonate solution (75% concentrated in OMS) |
| 1.63 kg | Seed |

| Test # | PVC Seed Type | Av. Particle Size of Prod. | Coefficient Of Variation [Std. Dev/ Particle Size |
|---|---|---|---|
| A | None | 189 | 0.411 |
| B | Suspension PVC Resin | 195 | 0.411 |
| C | Mass PVC Resin | 207 | 0.427 |
| D | Emulsion PVC Resin | 127 | 0.305 |

EXAMPLE 2

An additional comparison of the use of suspension polymerized vinyl chloride resin as seed in a suspension polymerized vinyl chloride reaction, 0.01 phm of suspension polymerized vinyl chloride was used to seed a suspension polymerized vinyl chloride reaction in a 1600 gal. reactor.

The following was added to the reactor:

2204 Kg $H_2O$

2041 Kg Vinyl Chloride Monomer

.05 phm Di(2-ethylhexyl) Peroxydicarbonate

.05 phm of Hydroxypropyl Methylcellulose

The suspension polymerization was conducted to 85% completion. The vinyl chloride resin quality was extremely poor, as it contained nonadsorbant particles (called "fisheyes") in amounts too numerous to count.

EXAMPLE 3

(1) Eight suspension polymerizations of vinyl chloride were conducted. The following additives were combined in a 50 gal. reactor:

81.65 Kg $H_2O$

54.43 Kg VCM

0.070 phm Di(2-ethylhexyl) Peroxydicarbonate

0.060 phm Hydroxypropyl Methylcellulose

Polymerization time was measured from the start of initiation and the reaction was continued to 85% conversion. Emulsion resin was added to runs A and B in the stated amount and compounded to runs without seed added.

|   | Emulsion seed (in phm) | Polymerization Time (hr: min) |
|---|---|---|
| A | 3 | 3 hr. 39 min. |
|   |   | Average Seeded Time |
|   |   | 3 hr. 44 min. |
| B | 3 | 3 hr. 39 min. |
| C | O | 5 hr. 18 min. |
| D | O | 5 hr. |
| E | O | 5 hr. 12 min. |
| F | O | 5 hr. 44 min. |
| G | O | 5 hr. 01 min. |
| H | O | 5 hr. |
|   |   | Average Unseeded Time |
|   |   | 5 hr. 12 min. |

(2)  To see the influence of emulsion seed concentration on particle size five suspension polymerizations were completed, each having a different emulsion seed concentration.  The following data was compiled:

|   | Emulsion Seed Concentration | Ave. Particle Size (in Microns) |
|---|---|---|
| A | 0.5 | 178 |
| B | 1.0 | 151 |
| C | 1.0 | 143 |
| D | 1.75 | 130 |
| E | 3.0 | 123 |

(See graphic portrayal figure and a comparison with the results from Example 3.)

(3)  Gardner Color

The symbol "b" is an expression of the dominant color value.  Intensity of the color is indicated by the magnitude of the value.  The standard is the Gardner sample

- 8 -

plaque given the value of 0.0.  The lowest values are most desired.

| Emulsion Seed Concentration | Gardner b Value |
|---|---|
| O | 3.8 |
| 0.5 phm | 3.4 |
| 3.0 phm | 2.8 |
| 3.5 | 2.7 |

EXAMPLE 4

A comparison example using mass polymerized vinyl chloride seed was carried out.

Three suspension polymerizations were completed in a 15 gal. reactor with varying mass seed concentrations.

The following amounts were added to the reactor in each case:

27.22 Kg. $H_2O$
18.14 K Vinyl Chloride Monomer
0.06 phm Hydroxypropyl Methylcellulose
0.083 phm Di(2-ethylhexyl) Peroxydicarbonate

| Run | Mass Seed Concentration | Product Particle Size (in microns) |
|---|---|---|
| W | 0.0 | 164 |
| X | 1.0 | 158 |
| Y | 2.5 | 153 |
| Z | 5.0 | 183 |

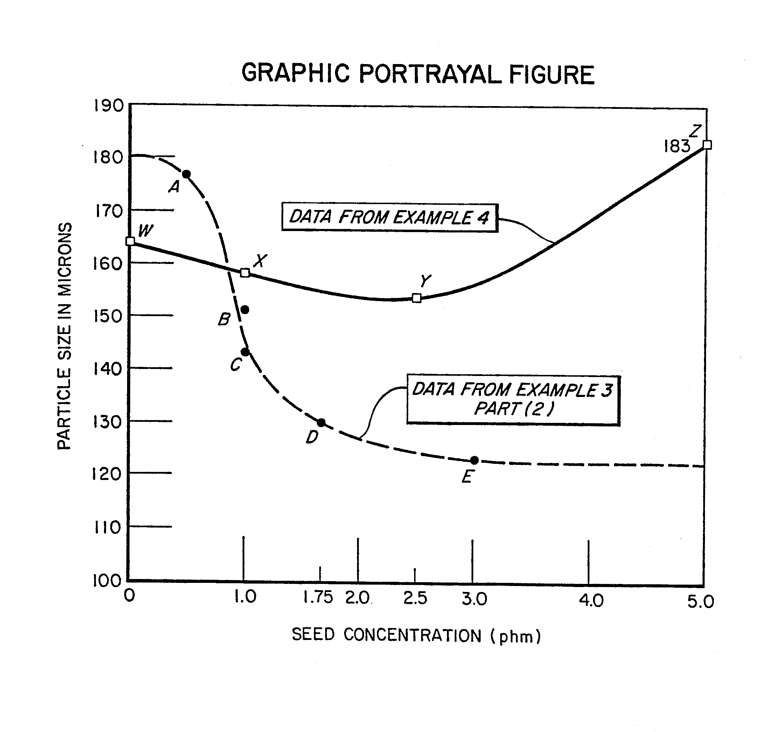

The accompanying drawing is a graphic portrayal figure showing the effect of mass polymerised vinyl seed on the peptide.

Example 1 demonstrates the advantages gained by using emulsion polymerized vinyl chloride resin as seed in the suspension polymerization system as opposed to seeds made from mass polymerizations or suspension polymerizations. The smallest coefficient of variation and the smallest average particle size is achieved using emulsion polymerized vinyl chloride resin. In addition to this, the suspension polymerized seed as indicated in Example 2 causes fisheyes in the product.

Emulsion polymerized vinyl chloride seed used in suspension polymerization system also shortens polymerization time, and can achieve particle size control by controlling the seed concentration suspension.

Part 3 of Example 3 shows that the Gardner color value improves as the emulsion seed concentration increases. Gardner color b value is shown to improve to a value of 2.8 at a seed concentration of 3.5 phm.

Example 4 is a comparison example using mass polymerised vinyl chloride seed. As is shown in the graphic portrayal figure the data in Example 4 demonstrates the inferiority of mass polymerized seed in a suspension polymerization system. The product of a suspension polymerization using mass polymerized seed does not deliver product particle size below 150 microns, and fails to deliver the capability of achieving particle size variation.

- 10 -

While certain embodiments and details have been shown for the purpose of illustrating this invention, it will be apparent to those skilled in this art that various changes and modifications may be made herein without departing from the spirit or scope of the invention.

## Claims

1.   A process for the preparation of an improved PVC resin comprising:

adding emulsion polymerized polyvinyl chloride seed to a vinyl chloride monomer suspension polymerization system;

conducting a suspension polymerization of vinyl chloride monomer; and

collecting the product.

2.   A process as claimed in claim 1 wherein the emulsion polymerization PVC seed is present at a concentration of from about 0.001 to about 0.65 parts per hundred parts of monomer (phm).

3.   A process as claimed in claim 1 wherein the emulsion polymerized PVC seed is present at a concentration of from about 0.65 to about 1.45 phm.

4.   A process as claimed in claim 1 wherein the emulsion polymerized PVC seed is present at a concentration of from about 1.45 to about 50 phm.

5.   A process as claimed in claim 4 wherein the emulsion polymerized PVC seed is present at a concentration of from about 2 to about 50 phm, and a suspension agent is present at concentrations less than 0.15 phm.

6.   A process as claimed in claim 5 wherein the emulsion polymerized PVC seed is present at a concentration of from about 3 phm to about 50 phm and the suspension agent is present at a concentration of less than 0.05 phm.

7.   A process as claimed in any one of the preceding claims wherein the emulsion polymerized PVC seed has an average particle size of less than 75 microns.

8.   A process as claimed in claim 7 wherein the emulsion polymerized PVC seed has an average particle size of less than 5 microns.

9.   A process as claimed in any one of the preceding claims wherein the emulsion polymerized PVC seed is in the form of a resin or a latex.

10. Polyvinyl chloride resin whenever produced by a process which includes the process steps claimed in any one of the preceding claims.

# GRAPHIC PORTRAYAL FIGURE

DATA FROM EXAMPLE 4

DATA FROM EXAMPLE 3 PART (2)

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 005 174 (DYNAMIT NOBEL)<br><br>* Claim; page 1, lines 33-34 *<br><br>--- | 1,3-5,<br>7-10 | C 08 F 259/04<br>C 08 F 114/06 //<br>(C 08 F 259/04<br>C 08 F 214/06 ) |
| X | US-A-3 875 130 (THOMAS KEMP)<br>* Claims 1,2 *<br><br>--- | 1,3-10 | |
| X | CHEMICAL ABSTRACTS, vol. 74, no. 12, 22nd March 1971, page 14, no. 54380v, Columbus, Ohio, US;<br>& JP - A - 70 30 834 (MITSUBISHI MONSANTO CHEMICAL INDUSTRY CO., LTD.) 06-10-1970<br>* Abstract *<br><br>--- | 1 | |
| X | FR-A-2 133 994 (BP CHEMICAL)<br>* Claims 1,4,5,7; page 5, paragraph 2 *<br><br>----- | 1-10 | **TECHNICAL FIELDS SEARCHED (Int. Cl. ³)**<br><br>C 08 F |

The present search report has been drawn up for all claims

| Place of search<br>THE HAGUE | Date of completion of the search<br>04-07-1984 | Examiner<br>MEULEMANS R.A.M.G.G. |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82